# EUROPEAN PATENT APPLICATION

(11) **EP 4 063 684 A1**
(43) Date of publication of application: **28.09.2022**
(21) Application number: 22161551.1
(22) Date of filing: 11.03.2022
(51) Int. Cl.: F16F 1/12, F16F 1/13, B25B 27/30

(54) **PRESSING AND RETAINING DEVICE FOR SPRING**

(30) Priority: 11.03.2021 CN 202110267839
(71) Applicant: Nio Technology (Anhui) Co., Ltd, Hefei City, Anhui 230601 (CN)
(72) Inventor: WANG, Xinxin, AnTing Town, Jiading Shanghai (CN); JIA, Yongquan, AnTing Town, Jiading Shanghai (CN); HE, Yahui, AnTing Town, Jiading Shanghai (CN)
(74) Representative: Vossius & Partner Patentanwälte Rechtsanwälte mbB

(57) **Abstract**

The invention relates to the technical field of mechanical compression, and particularly provides a pressing and retaining device for a spring. The invention aims to solve the problems of inconvenient operation and poor compression accuracy in the existing technical solutions for spring pressing and retaining. To this end, a pressing and retaining device for a spring of the invention comprises a spring compression assembly and a spring retaining assembly. The spring compression assembly is configured to be capable of compressing the spring into a set state. The spring retaining assembly is configured to be capable of fixing the spring and maintaining a compressed state of the spring when the spring is compressed into the set state, and to be capable of still fixing the spring and maintaining the compressed state of the spring when the spring retaining assembly and the spring are disengaged as a whole from the spring compression assembly. Therefore, the invention makes it possible to remove the spring retaining assembly and the spring, which is compressed into the set state, as a whole from the spring compression assembly, and to use the whole for the assembly of a rear axle assembly of a vehicle. The pressing and retaining of the spring are easy to operate, and the safety during operation is also improved.

## Description

### Technical Field

The invention relates to the technical field of vehicle assembly equipment, and particularly to a pressing and retaining device for a spring.

### Background Art

Coil springs are springs subjected to torsional deformation in vehicles. In order to adapt to production of various vehicle models of different platforms on the same product line and to ensure that rear axle assemblies can be smoothly assembled, it is necessary to compress and retain rear coil springs.

In order to smoothly assemble the rear axle assembly, in a current technical solution, the coil spring is compressed by means of external force and directly mounted on a vehicle body. Therefore, it is necessary to use a large-sized tooling to cooperatively complete control of the vehicle body during compression and retaining of the spring, in order to smoothly assemble the coil spring.

However, in the existing technical solutions for spring pressing and retaining, there are problems such as inconvenient operation and poor compression accuracy. Especially, for some structurally-compact vehicle models, it is not possible to use the large-sized tooling for spring compression and retaining during assembly of the rear axle assembly, and the large-sized tooling itself also has high costs and is not applicable for some vehicle models with less production capacity.

Accordingly, there is a need in the art for a novel pressing and retaining device for a spring to solve the problems of inconvenient operation and poor accuracy of the existing technical solutions for spring pressing and retaining.

### Summary of the Invention

In order to solve the above-mentioned problems in the prior art, namely, in order to solve the problems of inconvenient operation and poor accuracy of the existing technical solutions for spring pressing and retaining, the invention provides a pressing and retaining device for a spring, the pressing and retaining device comprising a spring compression assembly and a spring retaining assembly. The spring compression assembly is configured to be capable of compressing the spring into a set state. The spring retaining assembly is configured to be capable of fixing the spring and maintaining a compressed state of the spring when the spring is compressed into the set state, and to be capable of still fixing the spring and maintaining the compressed state of the spring when the spring retaining assembly and the spring are disengaged as a whole from the spring compression assembly.

In a preferred technical solution of the pressing and retaining device for a spring described above, the spring retaining assembly comprises a first connecting portion and a second connecting portion, the first connecting portion is connected to the second connecting portion, the first connecting portion is arranged at an upper half portion of the spring, and the second connecting portion is correspondingly arranged at a lower half portion of the spring.

In a preferred technical solution of the pressing and retaining device for a spring described above, the spring retaining assembly further comprises a connecting rod via which the first connecting portion is connected to the second connecting portion; the first connecting portion comprises a first hook connecting block, and a first hook and a second hook which are hinged to the first hook connecting block, and the first hook connecting block is provided with a first mounting hole; and the second connecting portion comprises a second hook connecting block, and a third hook and a fourth hook which are hinged to the second hook connecting block, and the second hook connecting block is provided with a second mounting hole.

In a preferred technical solution of the pressing and retaining device for a spring described above, the first mounting hole is a through hole, the second mounting hole is a threaded hole, and the connecting rod is correspondingly provided with a boss and a thread. Alternatively, the first mounting hole and the second mounting hole are both threaded holes, and the connecting rod is correspondingly provided with threads.

In a preferred technical solution of the pressing and retaining device for a spring described above, a hexagonal prism is further provided at an end portion of the connecting rod.

In a preferred technical solution of the pressing and retaining device for a spring described above, the first hook and the third hook are correspondingly arranged on the same side, the second hook and the fourth hook are correspondingly arranged on the same side, the spring has a length along which the spring is clamped by the first hook and the third hook, which is equal to a length along which the spring is clamped by the second hook and the fourth hook, and the heights of mounting positions of the first hook and the second hook are different in an axial direction of the connecting rod, and the heights of mounting positions of the third hook and the fourth hook are correspondingly different in the axial direction of the connecting rod.

In a preferred technical solution of the pressing and retaining device for a spring described above, the spring retaining assembly is a U-shaped lock.

In a preferred technical solution of the pressing and retaining device for a spring described above, the spring compression assembly comprises a rack, a driving device, a fixing seat arranged on the rack, and a pressing plate connected to the driving device. The driving device is configured to be capable of driving the pressing plate to move close to or away from the fixing seat.

In a preferred technical solution of the pressing and retaining device for a spring described above, the fixing seat and the pressing plate are provided with spring limiting grooves.

In a preferred technical solution of the pressing and retaining device for a spring described above, an outer side portion where the spring is placed is further provided with a clamping block.

It can be understood by those skilled in the art that in the technical solutions of the invention, the pressing and retaining device for a spring comprises a spring compression assembly and a spring retaining assembly. The spring compression assembly is configured to be capable of compressing the spring into a set state. The spring retaining assembly is configured to be capable of fixing the spring and maintaining a compressed state of the spring when the spring is compressed into the set state, and to be capable of still fixing the spring and maintaining the compressed state of the spring when the spring retaining assembly and the spring are disengaged as a whole from the spring compression assembly.

With the above configuration, the invention makes it possible to first compress the spring to the set state, and then fix the spring and maintain the compressed state of the spring after the spring is compressed to the set state. Moreover, the spring retaining assembly and the spring can be disengaged from the spring compression assembly, and the spring retaining assembly can still fix the spring and maintain the compressed state of the spring after the spring retaining assembly and the spring are disengaged from the spring compression assembly. Hence, the invention makes it possible to remove the spring retaining assembly and the spring, which is compressed into the set state, as a whole from the spring compression assembly, and to use the whole for the assembly of a rear axle assembly of a vehicle. Accordingly, during the assembly of the rear axle assembly, there is no longer a need for a large-sized tooling to perform various operations on the vehicle body for spring compression and retaining, so that the pressing and retaining of the spring are easy to operate, the safety during operation is also improved, and the overall equipment investment cost in the assembly process is greatly reduced.

### Brief Description of the Drawings

A pressing and retaining device for a spring of the invention will be described below with reference to the accompanying drawings. In the drawings:
Fig. 1 is a schematic structural diagram of a spring pressing and retaining device;
Fig. 2 is a schematic structural diagram of a first embodiment of a spring retaining assembly;
Fig. 3 is a schematic structural diagram of the first embodiment of the spring retaining assembly assembled with a spring;
Fig. 4 is a schematic structural diagram of a spring compression assembly;
Fig. 5 is a schematic structural diagram of a second embodiment of the spring retaining assembly assembled with the spring;
Fig. 6 is a schematic structural diagram of a third embodiment of the spring retaining assembly assembled with the spring; and
Fig. 7 is a schematic structural diagram of a fourth embodiment of the spring retaining assembly assembled with the spring.

### List of reference numerals:

1-Spring retaining assembly;
11-First connecting portion; 111-First hook connecting block; 112-First hook; 113-Second hook; 1111-First mounting hole; 114-Snap groove;
12-Second connecting portion; 121-Second hook connecting block; 122-Third hook; 123-Fourth hook; 1211-Second mounting hole; 124-Snap;
13-Connecting rod; 131-Boss; 132-Thread; 133-Hexagonal prism;
14-Catch connecting block; 141-First catch; 142-Second catch; 143-Third catch; 144-Fourth catch;
15-U-shaped lock;
2-Spring compression assembly;
21-Rack;
22-Driving device;
23-Pressing plate; 231-Spring limiting groove;
24-Fixing seat;
25-Clamping block; and
3-Spring.

### Detailed Description of Embodiments

Preferred embodiments of the invention are described below with reference to the drawings. It should be understood by those skilled in the art that these embodiments are only for explaining the technical principles of the invention and are not intended to limit the scope of protection of the invention. Those skilled in the art can make adjustments according to requirements so as to adapt to specific application scenarios. For example, although the description is made herein by taking a mounting hole as an example, it is obvious that the invention may use various other mounting holes as long as they allow a connecting rod to pass through and enable connection.

It should be noted that in the description of the invention, the terms, such as "center", "upper", "lower", "left", "right", "vertical", "horizontal", "inner" and "outer", that indicate directions or positional relationships are based on the directions or positional relationships shown in the drawings only for convenience of description, and do not indicate or imply that the device or element must have a specific orientation, be constructed and operated in a specific orientation, and therefore cannot be understood as limitation to the invention. In addition, the terms "first", "second" and "third" are for descriptive purposes only and should not be construed as indicating or implying relative importance.

In addition, it should also be noted that, in the description of the invention, the terms "mount", "engage" and "connect" should be interpreted in a broad sense unless explicitly defined and limited otherwise, which, for example, may mean a fixed connection, a detachable connection or an integral connection; may mean a mechanical connection or an electrical connection; and may mean a direct connection, an indirect connection by means of an intermediary, or internal communication between two elements. For those skilled in the art, the specific meaning of the above-mentioned terms in the invention can be interpreted according to the specific situation.

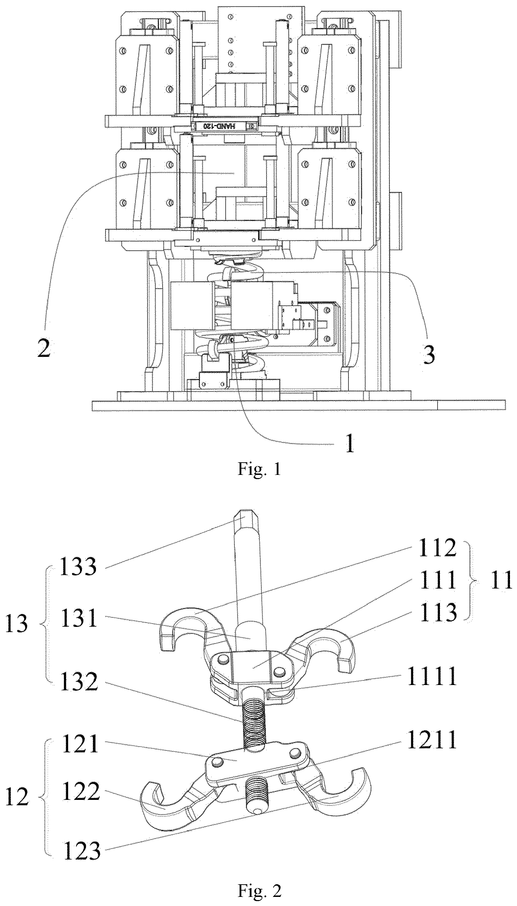

Firstly, referring to Fig. 1, a spring pressing and retaining device is described. Fig. 1 is a schematic structural diagram of the spring pressing and retaining device.

As shown in Fig. 1, in order to solve the problems of inconvenient operation and poor accuracy of the existing technical solutions for spring pressing and retaining, the invention provides a pressing and retaining device for a spring. The pressing and retaining device comprises a spring compression assembly 2 and a spring retaining assembly 1. The spring compression assembly 2 is configured to be capable of compressing the spring 3 into a set state. The spring retaining assembly 1 is configured to be capable of fixing the spring and maintaining a compressed state of the spring 3 when the spring 3 is compressed into the set state, and to be capable of still fixing the spring and maintaining the compressed state of the spring 3 when the spring retaining assembly 1 and the spring 3 are disengaged as a whole from the spring compression assembly 2.

The above configuration has the following advantages: the invention makes it possible to remove the spring retaining assembly 1 and the spring 3, which is compressed into the set state, as a whole from the spring compression assembly 2, and to use the whole for the assembly of a rear axle assembly of a vehicle. Accordingly, during the assembly of the rear axle assembly, there is no longer a need for a large-sized tooling to compress and retain the spring, so that the pressing and retaining of the spring are easy to operate, and the safety during operation is also improved.

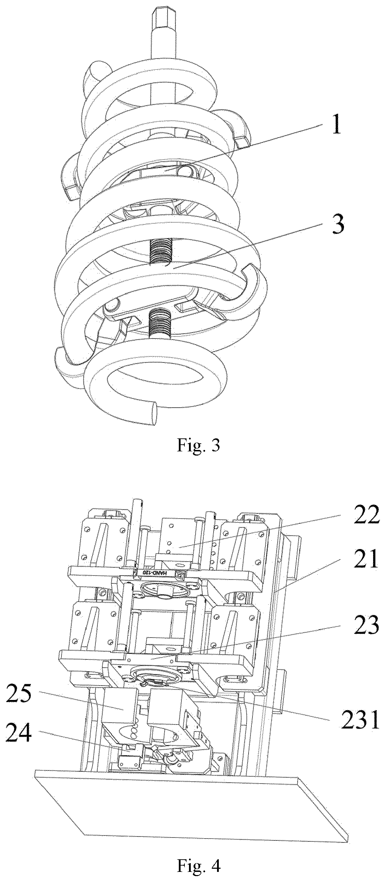

Further referring to Figs. 2 and 3, the spring retaining assembly 1 of the invention is described in further detail below.

As shown in Fig. 2, in a possible embodiment, the spring retaining assembly 1 comprises a first connecting portion 11 and a second connecting portion 12. The first connecting portion 11 is connected to the second connecting portion 12, the first connecting portion 11 is arranged at an upper half portion of the spring 3, and the second connecting portion 12 is correspondingly arranged at a lower half portion of the spring 3. In this embodiment, the spring 3 is axially fixed by providing the first connecting portion 11 and the second connecting portion 12 connected to each other at the upper half portion and the lower half portion of the spring 3 respectively. By means of the connection between the first connecting portion 11 and the second connecting portion 12, the compressed state of the spring 3 is maintained unchanged after the spring is compressed into the set state.

In order to better achieve a spring retaining function, in this embodiment, the spring retaining assembly 1 may further comprise a connecting rod 13. The first connecting portion 11 is connected to the second connecting portion 12 via the connecting rod 13. The first connecting portion 11 comprises a first hook connecting block 111, and a first hook 112 and a second hook 113 which are hinged to the first hook connecting block 111. The first hook connecting block 111 is provided with a first mounting hole 1111. The second connecting portion 12 comprises a second hook connecting block 121, and a third hook 122 and a fourth hook 123 which are hinged to the second hook connecting block 121. The second hook connecting block 121 is provided with a second mounting hole 1211. The first mounting hole 1111 is a through hole, and the second mounting hole 1211 is a threaded hole. The connecting rod 13 is correspondingly provided with a boss 131 and a thread 132, and a hexagonal prism 133 is further arranged at an end portion of the connecting rod 13. During use, one end of the connecting rod 13 penetrates through the first connecting portion 11 through the first mounting hole 1111, and the connecting rod 13 is fixed to the first connecting portion 11 by means of the boss 131 on the connecting rod 13, and the other end of the connecting rod 13 is in threaded connection with the second connecting portion 12 through the second mounting hole 1211. Moreover, the first hook 112 and the second hook 113 are mounted at the upper half portion of the spring 3, and the third hook 122 and the fourth hook 123 are respectively correspondingly mounted at the lower half portion of the spring 3. The spring 3 compressed into the set state is clamped by adjusting the hexagonal prism 133 at the end portion of the connecting rod 13.

The above configuration has the following advantages: by hinging the first hook 112 and the second hook 113 to the first hook connecting block 111, hinging the third hook 122 and the fourth hook 123 to the second hook connecting block 121, mounting the first hook 112 and the second hook 113 to the upper half portion of the spring 3, and mounting the third hook 122 and the fourth hook 123 to the lower half portion of the spring 3, the spring 3 can be axially fixed, and the spring 3 can also be stressed uniformly during compression and retaining. In addition, by forming the through hole and the threaded hole in the first hook connecting block 111 and the second hook connecting block 121 respectively, connecting the connecting rod 13 to the first hook connecting block 111 and the second hook connecting block 121 and adjusting the hexagonal prism 133, the retaining function of the compressed state of the spring 3 can be achieved, and the distance between the first connecting portion 11 and the second connecting portion 12 in a retaining state can be easily adjusted, which is better suitable for maintaining the state of the spring 3 in different compressed states.

It can be understood that although the forms of the holes in the first hook connecting block 111 and the second hook connecting block 121 are described in this embodiment respectively by taking the first mounting hole 1111 being the through hole and the second connection hole 1211 being the threaded hole as an example, the forms of the holes in the first hook connecting block 111 and the second hook connecting block 121 in this embodiment are not limited thereto, as long as the connecting rod 13 is connected and fixed to the first hook connecting block 111 and the second hook connecting block 121 respectively. For example, the first mounting hole 1111 and the second mounting hole 1211 are both threaded holes, and the connecting rod 13 is correspondingly provided with threads 132. For another example, the first mounting hole 1111 and the second mounting hole 1211 are both through holes, correspondingly, one end of the connecting rod is provided with the boss 131, and the other end thereof is provided with a nut as another detachable boss.

In order to further ensure the accuracy of spring compression, the first hook 112 and the third hook 122 are correspondingly arranged on the same side, the second hook 113 and the fourth hook 123 are correspondingly arranged on the same side, the spring has a length along which the spring 3 is clamped by the first hook 112 and the third hook 122, which is equal to a length along which the spring 3 is clamped by the second hook 113 and the fourth hook 123, the heights of mounting positions of the first hook 112 and the second hook 113 are different in an axial direction of the connecting rod 13, and the heights of mounting positions of the third hook 122 and the fourth hook 123 are correspondingly different in the axial direction of the connecting rod 13.

The above configuration has the following advantages: since the spring 3 is helical, if it is not specially designed and straightforwardly, the first hook 112 and the second hook 113 are symmetrically designed, and the third hook 122 and the fourth hook 123 are symmetrically designed, parts of the spring 3 with different heights will be squeezed to the same horizontal plane, resulting in deflection of the spring. However, in the invention, the first hook 112 and the second hook 113 are mounted at different height positions in the axial direction of the connecting rod 13, the length along which the spring 3 is clamped by the first hook 112 and the third hook 122 is equal to the length along which the spring 3 is clamped by the second hook 113 and the fourth hook 123, such that the spring 3 does not tilt during the compression and retaining. On the one hand, it is ensured that the spring 3 is stressed uniformly, and on the other hand, the safety of the spring 3 during the compression and retaining is also improved.

As a preferred embodiment of the pressing and retaining device for a spring provided in this embodiment, as shown in Fig. 4, the spring compression assembly 2 comprises a rack 21, a driving device 22, a fixing seat 24 arranged on the rack 21, and a pressing plate 23 connected to the driving device 22. The driving device 22 is configured to be capable of driving the pressing plate 23 to move close to or away from the fixing seat 24. It can be understood that in this embodiment, the driving device 22 may be an electric or hydraulic push rod. Although the form of the driving device 22 in this embodiment is described by taking the electric or hydraulic push rod as an example, the form of the driving device 22 of this embodiment is not limited thereto, as long as the effect that the pressing plate 23 compresses the spring 3 can be achieved by applying an external force to the pressing plate 23.

In order to accurately place the spring 3 on the spring compression assembly 2, the fixing seat 24 and the pressing plate 23 are both provided with spring limiting grooves 231.

The above configuration has the following advantages: by forming the spring limiting grooves 231 on the fixing seat 24 and the pressing plate 23, it is possible to vertically place the spring 3 in the axial direction thereof, reducing the degree of tilt of the spring 3 during the compression. Hence, on the one hand, the compression accuracy of the spring 3 is improved, and on the other hand, the safety of the spring 3 during pressing and retaining is also improved.

In order to further improve the compression accuracy of the spring, an outer side portion where the spring 3 is placed is further provided with a clamping block 25.

The above configuration has the following advantages: by providing the clamping block 25 at the outer side portion where the spring 3 is placed, it is possible to assist further precise positioning of the spring 3 placed in the spring limiting grooves 231 on the fixing seat 24 and the pressing plate 23, to further reduce offset of the spring 3 during the compression, thereby further improving the compression accuracy of the spring 3.

In conclusion, in this embodiment, by providing the first connecting portion 11 and the second connecting portion 12 in the spring retaining assembly 1, and connecting the first connecting portion 11 and the second connecting portion 12, the spring 3 in the compressed state is maintained in its compressed state, so that the spring retaining assembly 1 and the spring 3 can be disengaged as a whole from the spring compression assembly 2. Moreover, combined with the spring limiting grooves 231 formed on the fixing seat 24 and the pressing plate 23 of the spring compression assembly 2, and the clamping block 25 arranged on the outer side portion of the spring 3, accurate positioning of the spring 3 is achieved. Accordingly, the technical solution for pressing and retaining the spring 3 is easy to operate, and the compression accuracy of the spring 3 and the safety of the spring 3 are also improved during the compression and retaining.

It should be noted that the foregoing implementations are only used to explain the principles of the invention, and are not intended to limit the scope of protection of the invention. Those skilled in the art can adjust the foregoing structures without departing from the principle of the invention, so that the invention is applicable to more specific application scenarios.

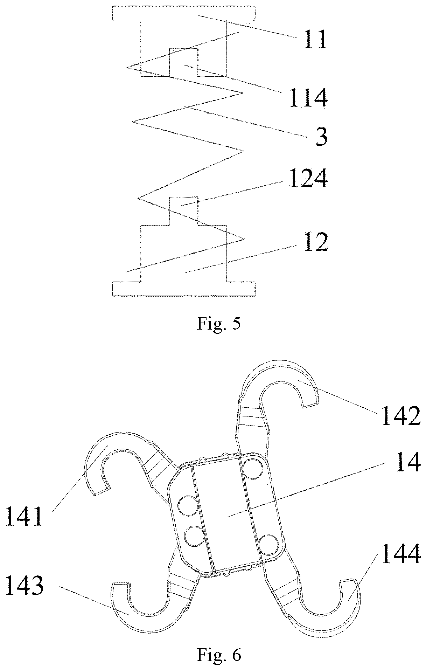

For example, the spring retaining assembly is not limited to the above embodiment. In an alternative embodiment, as shown in Fig. 5, the spring retaining assembly 1 comprises the first connecting portion 11 and the second connecting portion 12, but does not comprise the connecting rod 13. The first connecting portion 11 is connected to the second connecting portion 12, the first connecting portion 11 is arranged at the upper half portion of the spring 3, the second connecting portion 12 is correspondingly arranged at the lower half portion of the spring 3, and the first connecting portion 11 and the second connecting portion 12 are respectively provided with a snap groove 114 and a snap 124. During use, the spring 3 is clamped between the first connecting portion 11 and the second connecting portion 12, and when the spring 3 is compressed into the set state, the first connecting portion 11 and the second connecting portion 12 are connected by means of the snap groove 114 on the first connecting portion 11 and the snap 124 on the second connecting portion 12. In this embodiment, the spring 3 is axially fixed by providing the first connecting portion 11 and the second connecting portion 12 connected to each other at the upper half portion and the lower half portion of the spring 3 respectively. By means of the snap connection between the first connecting portion 11 and the second connecting portion 12, the compressed state of the spring 3 is maintained unchanged after the spring is compressed into the set state. This does not depart from the principle of the invention and therefore falls within the protection scope of the invention, as long as the spring retaining assembly 1 can axially fix the spring 3 and retain the spring 3 in the compressed state.

For example, in another alternative embodiment, as shown in Fig. 6, the spring retaining assembly 1 comprises a catch connecting block 14. A first catch 141 and a second catch 142 are separately hinged to the upper end of the catch connecting block 14, and a third catch 143 and a fourth catch 144 are separately hinged to the lower end of the catch connecting block 14. The first catch 141 and the second catch 142 are mounted at the upper half portion of the spring 3, and the third catch 143 and the fourth catch 144 are respectively correspondingly mounted at the lower half portion of the spring 3. During use, the catch connecting block 14 is placed in the spring 3, the first catch 141 and the second catch 142 catch the upper half portion of the spring 3, while the third catch 143 and the fourth catch 144 catch the lower half portion of the spring 3. In this embodiment, by connecting the first catch 141 and the second catch 142 to the upper half portion of the spring 3, and connecting the third catch 143 and the fourth catch 144 to the lower half portion of the spring 3, the spring 3 is axially fixed, and the compressed state of the spring 3 is maintained. This does not depart from the principle of the invention and therefore falls within the protection scope of the invention, as long as the spring retaining assembly 1 can axially fix the spring 3 and retain the spring 3 in the compressed state.

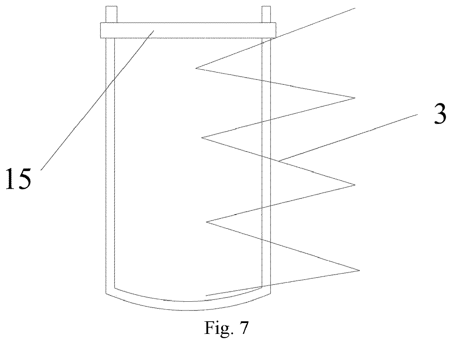

For example, in another alternative embodiment, as shown in Fig. 7, the spring retaining assembly 1 is a U-shaped lock 15. The U-shaped lock 15 is used to lock the compressed spring 3 when the spring 3 is compressed into the set state. In this embodiment, the spring 3 compressed into the set state is locked by the U-shaped lock 15 to maintain the compressed state of the spring 3. This does not depart from the principle of the invention and therefore falls within the protection scope of the invention, as long as the spring retaining assembly 1 can retain the spring 3 in the compressed state.

Furthermore, those skilled in the art should understand that although some embodiments as described herein comprise certain features included in other embodiments, instead of other features, the combination of the features of different embodiments means to be within the protection scope of the invention and form different embodiments. For example, in the claims of the invention, any one of the examples set forth thereby can be used in any combination.

Heretofore, the technical solutions of the invention have been described in conjunction with the preferred embodiments shown in the drawings, however, those skilled in the art can readily understand that the scope of protection of the invention is obviously not limited to these specific embodiments. Those skilled in the art could make equivalent changes or substitutions to the related technical features without departing from the principles of the invention, and all the technical solutions after the changes or the substitutions fall within the scope of protection of the invention.

## Claims

1. A pressing and retaining device for a spring, the pressing and retaining device comprising a spring compression assembly and a spring retaining assembly, wherein
the spring compression assembly is configured to be capable of compressing the spring into a set state; and
the spring retaining assembly is configured to be capable of fixing the spring and maintaining a compressed state of the spring when the spring is compressed into the set state, and to be capable of still fixing the spring and maintaining the compressed state of the spring when the spring retaining assembly and the spring are disengaged as a whole from the spring compression assembly.

2. The pressing and retaining device for a spring according to claim 1, wherein the spring retaining assembly comprises a first connecting portion and a second connecting portion, the first connecting portion is connected to the second connecting portion, the first connecting portion is arranged at an upper half portion of the spring, and the second connecting portion is correspondingly arranged at a lower half portion of the spring.

3. The pressing and retaining device for a spring according to claim 2, wherein the spring retaining assembly further comprises a connecting rod via which the first connecting portion is connected to the second connecting portion;
the first connecting portion comprises a first hook connecting block, and a first hook and a second hook which are hinged to the first hook connecting block, and the first hook connecting block is provided with a first mounting hole; and
the second connecting portion comprises a second hook connecting block, and a third hook and a fourth hook which are hinged to the second hook connecting block, and the second hook connecting block is provided with a second mounting hole.

4. The pressing and retaining device for a spring according to claim 3, wherein the first mounting hole is a through hole, the second mounting hole is a threaded hole, and the connecting rod is correspondingly provided with a boss and a thread; or
the first mounting hole and the second mounting hole are both threaded holes, and the connecting rod is correspondingly provided with threads.

5. The pressing and retaining device for a spring according to claim 3 or 4, wherein a hexagonal prism is further provided at an end portion of the connecting rod.

6. The pressing and retaining device for a spring according to claim 3, 4, or 5 wherein the first hook and the third hook are correspondingly arranged on the same side, the second hook and the fourth hook are correspondingly arranged on the same side, the spring has a length along which the spring is clamped by the first hook and the third hook, which is equal to a length along which the spring is clamped by the second hook and the fourth hook, and the heights of mounting positions of the first hook and the second hook are different in an axial direction of the connecting rod, and the heights of mounting positions of the third hook and the fourth hook are correspondingly different in the axial direction of the connecting rod.

7. The pressing and retaining device for a spring according to any one of claims 1 to 6, wherein the spring retaining assembly is a U-shaped lock.

8. The pressing and retaining device for a spring according to any one of claims 1 to 7, wherein the spring compression assembly comprises a rack, a driving device, a fixing seat arranged on the rack, and a pressing plate connected to the driving device, wherein the driving device is configured to be capable of driving the pressing plate to move close to or away from the fixing seat.

9. The pressing and retaining device for a spring according to claim 8, wherein the fixing seat and the pressing plate are provided with spring limiting grooves.

10. The pressing and retaining device for a spring according to any one of claims 1 to 9, wherein an outer side portion where the spring is placed is further provided with a clamping block.
